# EUROPÄISCHE PATENTSCHRIFT

(11) **EP 2 394 763 B1**
(45) Veröffentlichungstag und Bekanntmachung des Hinweises auf die Patenterteilung: **06.07.2016**
(21) Anmeldenummer: 11167018.8
(22) Anmeldetag: 23.05.2011
(51) Int. Cl.: B23B 27/04, B23D 61/06

(54) **Schneidplatte und Sägeblatt mit einer Vielzahl derartiger Schneidplatten**
Cutting plate and saw blade with a number of such cutting plates
Plaque de coupe et lame de scie dotée d'une multitude de telles plaques de coupe

(30) Priorität: 09.06.2010 AT 9422010
(43) Veröffentlichungstag der Anmeldung: 14.12.2011
(73) Patentinhaber: BOEHLERIT GmbH & Co.KG., 8605 Kapfenberg (AT); Maschinenfabrik Liezen und Gießerei Ges.m.b.H., 8940 Liezen (AT)
(72) Erfinder: Bärnthaler, Walter, 8641, St. Marein im Mürztal (AT); Lukas, Martin, 8650, Kindberg (AT); Feiel, Andre, 8612, Tragöß (AT); Theischinger, Bernhard, 4623, Gundskirchen (AT); Zierler, Josef, 4802, Ebensee (AT)
(74) Vertreter: Wirnsberger, Gernot

(56) Entgegenhaltungen:
- EP-A1- 0 385 495
- WO-A1-99/12680
- DE-A1- 4 415 425
- DE-A1- 19 955 581

## Beschreibung

Die Erfindung betrifft eine Schneidplatte, insbesondere für ein Sägeblatt, das im Wesentlichen eben und in einer Seitenansicht kreisförmig ausgebildet ist und an einem Umfang Schlitze aufweist, in welchen jeweils eine Schneidplatte mit einem elastischen Spannelement gehalten ist, wobei die Schneidplatte länglich ausgebildet ist, eine stirnseitige Schneidkante aufweist und entlang einer Länge der Schneidplatte von der Schneidkante ausgehend optional mit einer Spanfläche mit einer Erhebung und unmittelbar oder mittelbar anschließend mit einer Anlagefläche für das Spannelement ausgebildet ist, gemäß dem Oberbegriff des Anspruchs 1. Eine solche Schneidplatte ist aus EP 385 495 A bekannt.

Des Weiteren betrifft die Erfindung eine Verwendung einer derartigen Schneidplatte.

Ferner betrifft die Erfindung ein Sägeblatt, das im Wesentlichen eben und in einer Seitenansicht kreisförmig ausgebildet ist und an einem Umfang Schlitze aufweist, in welchen jeweils eine Schneidplatte gehalten ist, wobei das Sägeblatt mit elastischen Spannelementen ausgebildet ist, welche jeweils eine Schneidplatte in einem der Schlitze halten.

Aus dem Stand der Technik ist es bekannt, ein kreisförmiges Sägeblatt an einem Umfang mit einer Vielzahl von Schneidplatten zu bestücken, die bei einer Rotation des Sägeblattes und Anstellung an ein Werkstück für eine Schnittleistung bzw. Spanabnahme sorgen. Die Schneidplatten können dabei am Sägeblatt auf unterschiedliche Weise befestigt sein. Möglich ist es, dass die Schneidplatten am Sägeblatt angelötet sind, was allerdings einen hohen logistischen Aufwand während einer Gebrauchsdauer des Sägeblattes mit sich bringt, da die Schneidplatten bzw. deren Schneidkanten nach Abnutzung vor Ort nachgeschärft werden müssen. Alternativ ist es auch möglich, dass die einzelnen Schneidplatten am Sägeblatt angeschraubt werden. Die Schneidplatten können dann nach eingetretenem Verschleiß einfach entfernt und durch neue Schneidplatten ersetzt werden. Ein logistischer Aufwand ist somit verringert. Nachteilig ist allerdings, dass Schneidplatten erst bei einer Breite eines Sägeblattes von etwa 8 mm oder mehr vor Ort praktikabel durch nicht fachmännisches Personal anschraubbar sind. Eine weitere Möglichkeit besteht darin, Schneidplatten mittels in einem Sägeblatt eingeformter Spannelemente, die mit in Ausnehmungen des Sägeblattes angeordneten Stellelementen zusammenwirken, in Plattensitzen bzw. Schlitzen des Sägeblattes zu befestigen bzw. zu halten. Hierfür kann das Sägeblatt beispielsweise mit Spalten ausgebildet sein, sodass zwischen den Spalten integrale Spannelemente gebildet sind, die beispielsweise jeweils durch einen in einer benachbarten Ausnehmung sitzenden exzentrischen Nocken zu einer in dem Plattensitz eingeschobenen Schneidplatte bewegbar bzw. an diese anstellbar sind, um die Schneidplatte zu fixieren.

Sägeblätter, die mit integralen Spannelementen sowie hiermit zusammenwirkenden Stellelementen ausgestattet sind, sind beispielsweise aus der DE 42 36 370 A1 oder der EP 1 995 008 A1 bekannt geworden. Die entsprechenden Schneidplatten sind so ausgebildet, dass ein Zusammenwirken mit den jeweiligen Spannelementen möglich ist. Bei diesen bekannten Schneidplatten hat es sich allerdings trotz der ansonsten gegebenen Vorteile im Zusammenwirken mit einem Sägeblatt bzw. dessen Stellelementen als nachteilig erwiesen, dass insbesondere bei hohen Belastungen die aufbringbaren Klemmkräfte zu gering sind, sodass sich einzelne Schneidplatten gegebenenfalls lösen können, was nicht nur unerwünscht ist, sondern vor allem auch bei Rotation des Sägeblattes für eine Gefahr des Bedienungspersonals sorgen kann.

Aufgabe der Erfindung ist es, eine Schneidplatte der eingangs genannten Art anzugeben, durch welche die Nachteile des Standes der Technik beseitigt oder zumindest verringert sind und bei der insbesondere hohe Klemmkräfte eines Spannelementes eines Sägeblattes wirksam werden können.

Eine weitere Aufgabe der Erfindung ist es, eine Verwendung einer derartigen Schneidplatte darzustellen.

Ferner ist es eine Aufgabe der Erfindung, ein Sägeblatt der eingangs genannten Art anzugeben, bei welchem die Nachteile des Standes der Technik beseitigt oder zumindest verringert sind.

Die Aufgabe der Erfindung wird durch die Merkmale des Anspruchs 1 gelöst.

Ein mit der Erfindung erzielter Vorteil ist insbesondere darin zu sehen, dass im Gegensatz zum Stand der Technik durch die aufragende zweite Teilfläche, die an die erste Teilfläche anschließt, eine optimale Verteilung von Klemmkräften möglich ist. Während gemäß dem Stand der Technik, z. B. DE 42 36 370 A1, erste Teilflächen vorgesehen sind, an welche an einem Sattelpunkt anschließend eine zweite, abfallende Teilfläche anschließt, ist gemäß der Erfindung eine aufragende Teilfläche vorgesehen. Dadurch kann ein optimales Anpressen der Schneidplatte in einen Plattensitz bzw. Schlitz erreicht werden, weil eine Resultierende der Klemmkraft günstiger eingestellt werden kann. Gleichzeitig sind auch von der Schneidkante ausgehend entlang der Länge der Schneidplatte zumindest bereichsweise verjüngt zulaufende Seitenflächen und/oder Seitenflächenbereiche vorgesehen. Dadurch kann eine optimale Einstellung einer Resultierenden der Klemmkräfte erreicht werden.

Es ist ein Vorteil, dass die beiden vorstehend dargestellten Maßnahmen miteinander kombiniert werden, also eine an die erste Teilfläche anschließende aufragende zweite Teilfläche vorgesehen ist und gleichzeitig von der Schneidkante ausgehend entlang der Länge der Schneidplatte zumindest bereichsweise verjüngt zulaufende Seitenflächen und/oder Seitenflächenbereiche vorgesehen sind. In diesem Fall wird nicht nur eine optimale Einstellung von Klemmkräften erreicht, sondern gleichzeitig auch eine Selbstzentrierung der Schneidplatte im Sägeblatt bei Anstellung des Spannelementes, da eine Nase des Spannelementes sowohl auf die zweite Teilfläche als auch die verjüngt zulaufenden Seitenflächen und/oder Seitenflächenbereiche und gleichzeitig auf die erste Teilfläche drückt und zudem an einem zur ersten Teilfläche abfallenden Bereich der Erhebung anliegen kann, sodass sich die Schneidplatte bei Anstellung bzw. Anpressen des Spannelementes quasi selbst passgenau in einer Sägeblattebene zentriert.

Bevorzugt ist es, dass seitlich der ersten Teilfläche von der Schneidkante ausgehend entlang der Länge der Schneidplatte durchgehend verjüngt zulaufende Seitenflächen vorgesehen sind, wobei sich eine Verjüngung über 75 % einer Länge der ersten Teilfläche, bevorzugt im Wesentlichen über die gesamte Länge der ersten

Teilfläche, erstreckt. Durch eine entsprechende Ausbildung können die vorstehend erläuterten Effekte noch verstärkt werden. Gleichwohl ist es nicht unbedingt erforderlich, dass die verjüngt zulaufenden Seitenflächen durchgehend verjüngt sind. Vorgesehen kann nämlich auch sein, dass die Seitenflächen in Draufsicht mit einer Art Verzahnung ausgebildet sind, in welche eine entsprechende Verzahnung der Nase eines Spannelementes eingreift.

Im Unterschied zum Stand der Technik kann nunmehr vorgesehen sein, und ist es bevorzugt, dass die erste Teilfläche eben ausgebildet ist. Die zweite Teilfläche kann in Draufsicht dann relativ kurz ausgebildet sein und beispielsweise maximal 10 % der Länge der ersten Teilfläche aufweisen, ohne dass die erfindungsgemäßen Vorteile nicht zur Geltung kommen würden.

Grundsätzlich kann die zweite Teilfläche bereits eine entlang der Länge der Schneidplatte betrachtet abschließende Teilfläche darstellen. Bevorzugt ist es jedoch, dass an die zweite Teilfläche zumindest eine dritte Teilfläche anschließt, da die Schneidplatte zur Erreichung einer erforderlichen Stabilität derselben bevorzugt möglichst lang ausgebildet ist. Sofern eine dritte Teilfläche vorgesehen ist, ist die dritte Teilfläche bevorzugt eben ausgebildet und endet bei einer abfallenden vierten Teilfläche, welche an die dritte Teilfläche anschließt und schließlich an einer Seitenfläche endet. Dabei steht weder die dritte Teilfläche noch die vierte Teilfläche bei Anpressen eines Spannelementes eines Sägeblattes mit der Nase des Spannelementes in Kontakt.

Wie an sich aus dem Stand der Technik bekannt, kann die Schneidplatte im Bereich einer Grundfläche mit einer bevorzugt v-förmigen Nut ausgebildet sein. Dadurch wird einerseits eine Zentrierung der Schneidplatte in radialer Richtung erreicht und andererseits ein guter Sitz der Schneidplatte im Plattensitz bzw. Schlitz.

Des Weiteren ist es von Vorteil, wenn die Schneidplatte im Bereich der Schneidkante verbreitert ausgebildet ist, damit das Sägeblatt, an welchem mehrere Schneidplatten befestigt sind, bei Eingriff in ein Werkstück freigeht.

Die Schneidplatte kann an sich aus beliebigen Materialien, beispielsweise einem Schnellstahl, gebildet sein. Bevorzugt ist es jedoch, dass die Schneidplatte aus einem Hartmetall gebildet und vorzugsweise beschichtet ist. Als Beschichtung kann beispielsweise eine bekannte Titannitrid- oder Titancarbonitrid-Beschichtung zur Anwendung kommen.

Die weitere Aufgabe wird durch die Verwendung einer erfindungsgemäßen Schneidplatte in einem Sägeblatt, das im Wesentlichen eben und in einer Seitenansicht kreisförmig ausgebildet ist und an einem Umfang Schlitze aufweist, in welchen jeweils eine Schneidplatte mit einem elastischen Spannelement gehalten ist, gelöst.

Die noch weitere Aufgabe der Erfindung wird durch ein Sägeblatt der eingangs genannten Art gelöst, wenn dessen Schneidplatten gemäß einer erfindungsgemäßen Schneidplatte ausgebildet sind.

Dabei besteht ein Vorteil darin, dass die einzelnen Schneidplatten mit hohen Klemmkräften in den Plattensitzen bzw. Schlitzen gehalten werden können, sodass diese sich auch dann nicht lösen, wenn große einwirkende Kräfte gegeben sind. Darüber hinaus kann in Bezug auf ein Einführen der Schneidplatten auch ein Selbstzentrierungseffekt gegeben sein, wenn die Schneidplatten seitlich der ersten Teilfläche von der Schneidkante ausgehend entlang der Länge der Schneidplatte zumindest bereichsweise verjüngt zulaufende Seitenflächen und/oder Seitenflächenbereiche aufweisen.

Besonders bevorzugt ist es, damit das Sägeblatt bzw. dessen integral ausgebildete Spannelemente mit den einzelnen Schneidplatten möglichst gut zusammenwirken, dass die Spannelemente jeweils mit einer im Querschnitt zu einer Sägeblattebene zu einem Sägeblattzentrum hin konisch zulaufenden Nase ausgebildet sind.

Weitere Merkmale, Vorteile und Wirkungen der Erfindung ergeben sich anhand des nachfolgend dargestellten Ausführungsbeispiels. In den Zeichnungen, auf welche in diesem Zusammenhang Bezug genommen wird, zeigen:
Fig. 1 eine erfindungsgemäße Schneidplatte;
Fig. 2 einen Schnitt entlang der Linie II-II in Fig. 1;
Fig. 3 einen Schnitt entlang der Linie III III in Fig. 1;
Fig. 4 einen Schnitt entlang der Linie IV-IV in Fig. 3;
Fig. 5 einen Schnitt entlang der Linie V-V in Fig. 4;
Fig. 6 einen Ausschnitt eines Sägeblattes mit einem Spannelement in offener Stellung bei Einschieben einer Schneidplatte;
Fig. 7 eine vergrößerte Darstellung des Ausschnittes VII in Fig. 6;
Fig. 8 einen vergrößerten Schnitt entlang der Linie VIII-VIII in Fig. 6;
Fig. 9 einen verkleinerten Schnitt entlang der Linie IX-IX in Fig. 6;
Fig. 10 einen Ausschnitt eines Sägeblattes mit einem Spannelement in geschlossener Stellung und einer befestigten Schneidplatte;
Fig. 11 eine vergrößerte Darstellung eines Ausschnittes XI-XI in Fig. 10;
Fig. 12 einen vergrößerten Schnitt entlang der Linie XII-XII in Fig. 10;
Fig. 13 einen verkleinerten Schnitt entlang der Linie XIII-XIII in Fig. 10.

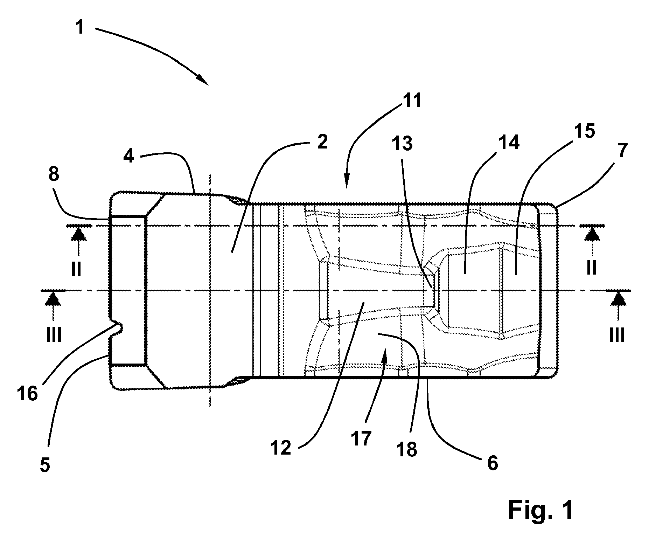

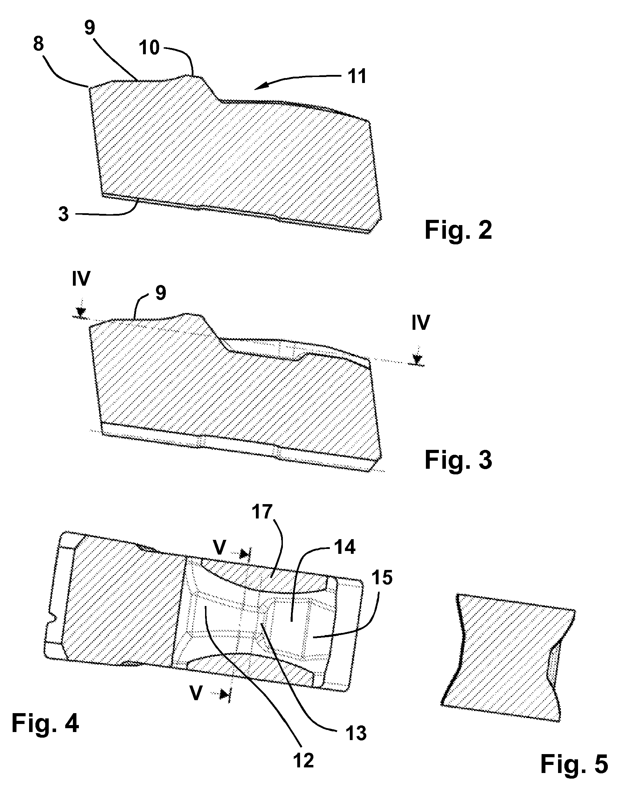

In Fig. 1 bis 5 ist eine erfindungsgemäße Schneidplatte 1 näher dargestellt. Die Schneidplatte 1 ist in Draufsicht gemäß Fig. 1 länglich ausgebildet, und zwar etwa rechteckig, und weist eine Deckfläche 2 sowie eine gegenüberliegende Grundfläche 3 auf. Die Deckfläche 2 und die Grundfläche 3 sind durch vier seitliche Flächen 4, 5, 6, 7 miteinander verbunden. Im Bereich der seitlichen Fläche 5 ist an einer Schnittlinie mit der Deckfläche 2 eine Schneidkante 8 ausgebildet. Die Schneidkante 8 ist im Wesentlichen gerade ausgebildet, weist jedoch einen kleinen Rücksprung bzw. eine Einbuchtung 16 auf, die sich in der Folge entlang der Seitenfläche 5 erstreckt. Dieser Rücksprung bzw. diese Einbuchtung 16 ist vorgesehen, um einen an sich breiten Span zu teilen. Wie insbesondere aus Fig. 2 und 3 ersichtlich ist, schließt an die Schneidkante 8 vorerst ein in Bezug auf die Grundfläche 3 ansteigender Bereich an, welcher in eine Spanfläche 9 übergeht, die vorzugsweise mit einer Vertiefung, also als Spanmulde, ausgebildet ist. An die Spanfläche 9 schließt eine Erhebung 10 an, die dazu dient, einen abgenommenen Span abzuführen. Die Erhebung 10 weist einen höchsten Punkt auf, von dem die Erhebung 10 abfällt und schließlich in eine Anlagefläche 11 übergeht, in deren Bereich die Schneidplatte 1 mittels eines Klemmelementes in einem Plattensitz gehalten werden kann.

Wie ebenfalls aus Fig. 1 bis 5 ersichtlich ist, ist die Anlagefläche 11 mit einer ersten Teilfläche 12 ausgebildet, die an die Erhebung 10 anschließt. Die erste Teilfläche 12 ist eben ausgebildet und verläuft parallel zur Grundfläche 3 der Schneidplatte 1. Wie insbesondere aus Fig. 3 und 4 ersichtlich ist, schließt an die erste Teilfläche 12 eine relativ kurze zweite Teilfläche 13 an, die sowohl in Seitenansicht als auch in Draufsicht nur einen Bruchteil einer Länge der ersten Teilfläche 12 beträgt. Bevorzugt kann vorgesehen sein, dass in Draufsicht eine Länge der zweiten Teilfläche 13 weniger als 20 %, vorzugsweise weniger als 10 %, insbesondere weniger als 8 %, der ersten Teilfläche 12 aufweist. Wiewohl es nicht zwingend ist, kann an die zweite Teilfläche 13, die ausgehend von der ersten Teilfläche 12 aufragend ausgebildet ist, eine ebene dritte Teilfläche 14 sowie eine daran anschließende, abfallende vierte Teilfläche 15 vorgesehen sein.

Wie aus einer Zusammenschau von Fig. 1 bis 4 ersichtlich ist, sind seitlich der ersten Teilfläche 12 zu den seitlichen Flächen 4, 6 hin Seitenflächen 17 ausgebildet, die ausgehend von der ersten Teilfläche 12 wie die zweite Teilfläche 13 aufragend ausgebildet sind, die zweite Teilfläche 13 jedoch höhenmäßig überragen. Die beidseitig der ersten Teilfläche 12 angeordneten Seitenflächen 17 sind in mehrere Seitenflächenbereiche 18 untergliedert. Wichtig ist, dass die Seitenflächen 17 bzw. die einzelnen Seitenflächenbereiche 18 im Wesentlichen zumindest im Bereich der ersten Teilfläche 12 von der Schneidkante 8 ausgehend betrachtet entlang der Schneidplatte 1 bis etwa in den Bereich der zweiten Teilfläche 13 zumindest bereichsweise verjüngt zulaufend ausgebildet sind. Mögliche Ausführungsvarianten sind dabei nicht unbedingt auf die in Fig. 1 bis 4 dargestellte Ausführungsvariante beschränkt. Vielmehr kann die zumindest bereichsweise verjüngte Ausbildung der Seitenflächen 17 bzw. Seitenflächenbereiche 18 auch dadurch erreicht werden, dass in den entsprechenden Bereichen eine gewellte oder gezahnte Struktur vorgesehen ist. Im Bereich der zweiten Teilfläche 13 sowie der dritten Teilfläche 14 und der vierten Teilfläche 15 können die Seitenflächen 17 bzw. Seitenflächenbereiche 18 wiederum in gleicher Blickrichtung voneinander auseinanderlaufend ausgebildet sein, wie dies in Fig. 4 ersichtlich ist. Durch eine derartige Ausbildung wird erreicht, was insbesondere in Fig. 5 ersichtlich ist, dass eine strukturell vorgegebene Vertiefung mit seitlichen Anschlägen bereitgestellt ist, was eine besonders feste Fixierung der Schneidplatte 1 in einem Plattensitz eines Sägeblattes 19 ermöglicht, was nachfolgend erläutert ist.

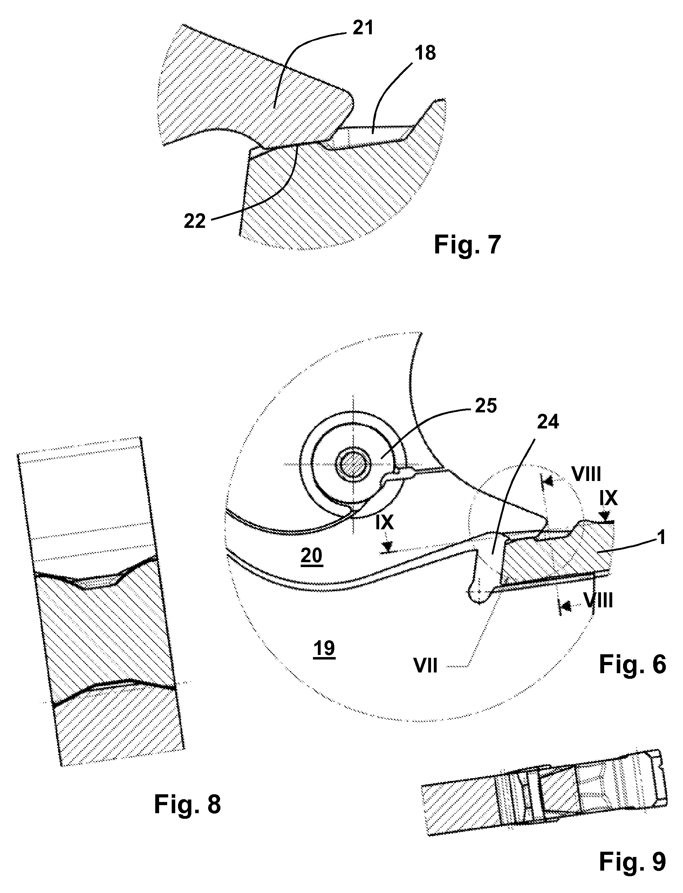

In Fig. 6 bis 9 sind ein Teil eines Sägeblattes 19 mit einem elastisch verformbaren Spannelement 20 sowie diesbezügliche Schnitte dargestellt. Das Sägeblatt 19 besteht üblicherweise aus einem Stahl und ist eben und in einer nicht dargestellten vollständigen Seitenansicht kreisförmig ausgebildet. Das Sägeblatt 19 weist an einem Umfang verteilt eine Vielzahl von Plattensitzen bzw. Schlitzen 24 auf, in welche Schneidplatten 1 eingesetzt werden können. Das Sägeblatt 19 ist im Bereich der Plattensitze bzw. Schlitze 24 jeweils mit einem integral eingeformten, elastisch verformbaren Spannelement 20 ausgebildet, das eine endseitige Nase 21 aufweist. Damit das Spannelement 20 an eine Schneidplatte 1 anstellbar ist, ist ein Nocken 25 vorgesehen, der in einer Ausnehmung des Sägeblattes 19 benachbart zum Spannelement 20 sitzt. Der Nocken 25 kann wie in Fig. 6 dargestellt im Wesentlichen kreisförmig ausgebildet sein und liegt in zwei Punkten der Ausnehmung am Sägeblatt 19 und in einem weiteren Punkt am Spannelement 20 an, sodass eine 3-Punkt-Anlage für den Nocken 25 geschaffen ist, was vorteilhaft und aus der EP 1 995 008 A1 bekannt ist. Durch Drehen des Nockens 25 kann das Spannelement 20 aufgrund der beispielsweise mittels eines Lasers eingeformten schlitzförmigen Spalte an eine Schneidplatte 1 angestellt werden. Hierzu wird der Nocken 25 mittels eines Hilfsmittels, beispielsweise eines Schlüssels, gegen den Uhrzeigersinn in der Ausnehmung gedreht, wodurch das Spannelement 20, das im Bereich eines Kontaktpunktes mit dem Nocken 25 mit einer in Vergleich mit dessen Umfangsfläche größeren Steigung ausgebildet ist, nach unten gedrückt. Alternativ kann auch vorgesehen sein, dass das Spannelement 20 einer Kreisform der Ausnehmung angepasst ist, in der der Nocken 25 sitzt, wobei der Nocken 25 allerdings exzentrisch ausgebildet ist.

In Fig. 6 bis 9 ist eine Situation dargestellt, in welcher das Spannelement 20 des Sägeblattes 19 in einer offenen Stellung ist. In dieser Stellung kann die Schneidplatte 1 auf einfache Weise in den Plattensitz bzw. den Schlitz 24 eingeschoben werden. Dabei gleitet eine Nasengrundfläche 22 über die zweite Teilfläche 13; anschließend, wenn die Schneidplatte 1 vollständig in den Plattensitz bzw. Schlitz 24 eingeschoben ist, befindet sich die Nasengrundfläche 22 des Spannelementes 20 mit der endseitigen Nase 21 oberhalb einer durch die erste Teilfläche 12 und die Seitenflächen 17 sowie die zweite Teilfläche 13 und die Erhebung 10 gebildeten Vertiefung.

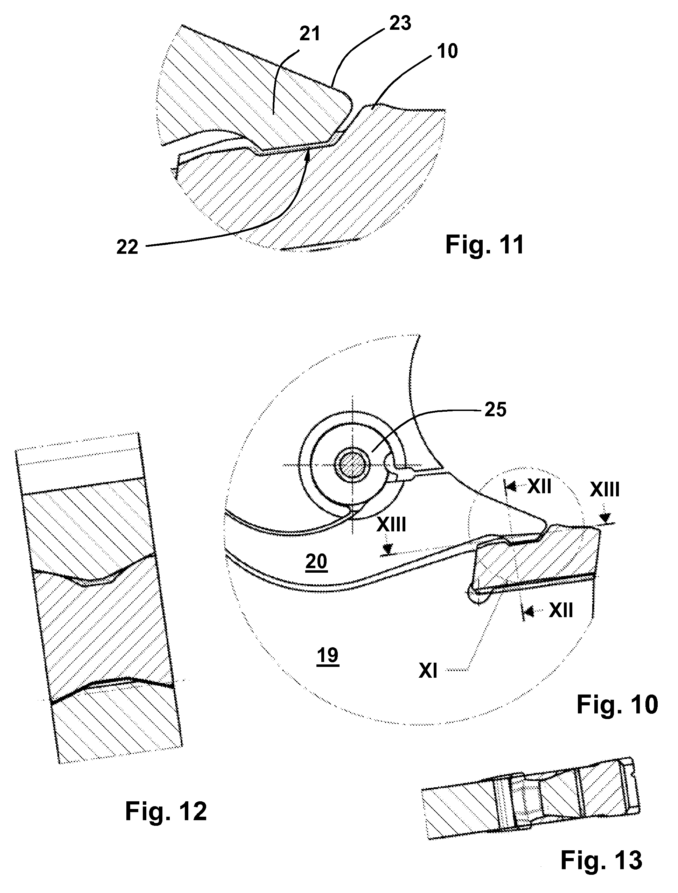

Ist die Schneidplatte 1 in den Plattensitz bzw. den Schlitz 24 eingeschoben, so kann das Spannelement 20 durch Betätigung des Nockens 25 an die Schneidplatte 1 angestellt werden und diese im Plattensitz bzw. Schlitz 24 fixieren, was in Fig. 10 bis 13 dargestellt ist. Aufgrund der Vertiefung, die in Draufsicht konisch ausgebildet ist (Fig. 1 bzw. 4) wird bei Anstellung des Spannelementes 20 die Schneidplatte 1 im Plattensitz bzw. Schlitz 24 automatisch bzw. ohne Weiteres zentriert. Diesbezüglich ist es auch von Vorteil, wenn die Schneidplatte im Bereich der Grundfläche 3, wie an sich aus dem Stand der Technik bekannt, mit einer v-förmigen Nut ausgebildet ist, in welche eine entsprechende Erhebung des Sägeblattes 19 eingreift. Dadurch ist sichergestellt, dass die Schneidplatte 1 in einer Sägeblattebene selbsttätig zentriert wird, wenn das Spannelement 20 an die eingeschobene Schneidplatte 1 angestellt bzw. an diese durch Betätigung des Nockens 25 zur Anlage gebracht wird. Bei Betätigung des Nockens 25 und Anstellung des Spannelementes 20 an die erste Teilfläche 12 zur Fixierung und Zentrierung der Schneidplatte 1 kann optional, je nach Ausbildung der Schneidplatte 1, gleichzeitig eine Anstellung an die an die erste Teilfläche 12 anschließende zweite Teilfläche 13 erfolgen, die wie erwähnt in Bezug auf die erste Teilfläche 12 aufragt, z. B. in einem Winkel 30° bis 80° gemessen zur Grundfläche 3. Dies ist allerdings nicht zwingend; vornehmlich dient dann die zweite Teilfläche 13, die maximal 1 mm aufragt, als zusätzliche Sicherung. Bei der in Fig. 10 bis 13 dargestellten Situation drückt das Spannelement 20 des Sägeblattes 19 bloß auf die ebene, erste Teilfläche 12 sowie, was insbesondere in Fig. 12 ersichtlich ist, die Seitenflächen 17. Da die Seitenflächen 17 verjüngt ausgebildet sind, kann dadurch eine günstige Kräfteverteilung erreicht werden, was sich insbesondere bei hohen Schnittkräften im Einsatz als günstig erweist. Wenngleich wie erwähnt nicht dargestellt, kann alternativ oder gleichzeitig auch vorgesehen sein, dass die Nase 21 des Spannelementes 20 auf die zweite Teilfläche 13 drückt und somit eine zusätzliche Kraftkomponente gegeben ist, welche die Schneidplatte 1 im Einsatz bzw. bei einwirkenden Schnittkräften im Plattensitz bzw. dem Schlitz 24 hält. Ein Nasenrücken 23 des Spannelementes 20 bildet in allen Fällen mit einer Stirnseite der Erhebung 10 eine im Wesentlichen durchgehende Fläche, entlang welcher ein Span abgleiten kann.

Wenngleich die erste Teilfläche 12 im vorstehend erläuterten Ausführungsbeispiel parallel zur Grundfläche 3 verläuft, kann die erste Teilfläche 12 auch geringfügig geneigt sein, z. B. in einem Winkel von bis zu etwa 5°, sodass die Nasengrundfläche 23 im gespannten Zustand des Spannelementes 20 planparallel an der ersten Teilfläche 12 anliegt und insbesondere Klemmkräfte maximiert sind.

## Patentansprüche

1. Schneidplatte (1), insbesondere für ein Sägeblatt (19), das im Wesentlichen eben und in einer Seitenansicht kreisförmig ausgebildet ist und an einem Umfang Schlitze (24) aufweist, in welchen jeweils eine Schneidplatte (1) mit einem elastischen Spannelement (20) gehalten ist, wobei die Schneidplatte (1) länglich ausgebildet ist, eine stirnseitige Schneidkante (8) aufweist und entlang einer Länge der Schneidplatte (1) von der Schneidkante (8) ausgehend optional mit einer Spanfläche (9) mit einer Erhebung (10) und unmittelbar oder mittelbar anschließend mit einer Anlagefläche (11) für das Spannelement (20) ausgebildet ist, wobei die Anlagefläche (11) mit einer ersten Teilfläche (12) ausgebildet ist, an welche eine aufragende zweite Teilfläche (13) anschließt, **dadurch gekennzeichnet, dass** seitlich der ersten Teilfläche (12) von der Schneidkante (8) ausgehend zu einem gegenüberliegenden Ende der Schneidplatte (1) hin entlang der Länge der Schneidplatte (1) zumindest bereichsweise verjüngt zulaufende Seitenflächen (17) und/oder Seitenflächenbereiche (18) vorgesehen sind.

2. Schneidplatte (1) nach Anspruch 1, **dadurch gekennzeichnet, dass** seitlich der ersten Teilfläche (12) von der Schneidkante (8) ausgehend entlang der Länge der Schneidplatte (1) durchgehend verjüngt zulaufende Seitenflächen vorgesehen sind, wobei sich eine Verjüngung über 75 % einer Länge der ersten Teilfläche (12), bevorzugt im Wesentlichen über die gesamte Länge der ersten Teilfläche (12), erstreckt.

3. Schneidplatte (1) nach Anspruch 1 oder 2, **dadurch gekennzeichnet, dass** die erste Teilfläche (12) eben ausgebildet ist.

4. Schneidplatte (1) nach einem der Ansprüche 1 bis 3, **dadurch gekennzeichnet, dass** die zweite Teilfläche (13) in Draufsicht auf die Schneidplatte kürzer als die erste Teilfläche (12) ist.

5. Schneidplatte (1) nach Anspruch 4, **dadurch gekennzeichnet, dass** die zweite Teilfläche (13) in Draufsicht maximal 10 % der Länge der ersten Teilfläche (12) aufweist.

6. Schneidplatte (1) nach einem der Ansprüche 1 bis 5, **dadurch gekennzeichnet, dass** an die zweite Teilfläche (13) zumindest eine dritte Teilfläche (14) anschließt.

7. Schneidplatte (1) nach Anspruch 6, **dadurch gekennzeichnet, dass** die dritte Teilfläche (14) eben ausgebildet ist und an die dritte Teilfläche (14) eine abfallende vierte Teilfläche (15) anschließt, die an einer Seitenfläche (7) endet.

8. Schneidplatte (1) nach einem der Ansprüche 1 bis 7, **dadurch gekennzeichnet, dass** die Schneidplatte (1) im Bereich einer Grundfläche (3) mit einer bevorzugt v-förmigen Nut ausgebildet ist.

9. Schneidplatte (1) nach einem der Ansprüche 1 bis 8, **dadurch gekennzeichnet, dass** die Schneidplatte (1) im Bereich der Schneidkante (8) verbreitert ausgebildet ist.

10. Schneidplatte (1) nach einem der Ansprüche 1 bis 9, **dadurch gekennzeichnet, dass** die Schneidplatte (1) aus einem Hartmetall gebildet und vorzugsweise beschichtet ist.

11. Verwendung einer Schneidplatte (1) nach einem der Ansprüche 1 bis 10 in einem Sägeblatt (19), das im Wesentlichen eben und in einer Seitenansicht kreisförmig ausgebildet ist und an einem Umfang Schlitze (24) aufweist, in welchen jeweils eine Schneidplatte (1) mit einem elastischen Spannelement (20) gehalten ist.

12. Sägeblatt (19), das im Wesentlichen eben und in einer Seitenansicht kreisförmig ausgebildet ist und an einem Umfang Schlitze (24) aufweist, in welchen jeweils eine Schneidplatte (1) gehalten ist, wobei das Sägeblatt (19) mit elastischen Spannelementen (20) ausgebildet ist, welche jeweils eine Schneidplatte (1) in einem der Schlitze (24) halten, **dadurch gekennzeichnet, dass** die Schneidplatten (1) nach einem der Ansprüche 1 bis 10 ausgebildet sind.

13. Sägeblatt (19) nach Anspruch 12, **dadurch gekennzeichnet, dass** die Spannelemente (20) jeweils mit einer im Querschnitt zu einer Sägeblattebene zu einem Sägeblattzentrum hin konisch zulaufenden Nase ausgebildet sind.

## Claims

1. A cutting insert (1), particularly for a saw blade (19) that is essentially realized plane and circular in a side view, wherein a circumference of said saw blade features slots (24), in which a cutting insert (1) is respectively held with an elastic tensioning element (20), wherein the cutting insert (1) is realized in an elongate fashion and features a frontal cutting edge (8), wherein said cutting insert (1) is, starting from the cutting edge (8), optionally realized with a face (9) with an elevation (10) along a length of the cutting insert (1), as well as with a contact surface (11) for the tensioning element (20) directly or indirectly adjacent thereto, and wherein the contact surface (11) is realized with a first partial surface (12) and an adjacent second, upright partial surface (13), **characterized in that** at least sectionally tapered lateral surfaces (17) and/or lateral surface areas (18) are provided laterally of the first partial surface (12) along the length of the cutting insert (1) starting from the cutting edge (8) to an opposite end of the cutting insert (1).

2. The cutting insert (1) according to claim 1, **characterized in that** continuously tapered lateral surfaces are provided laterally of the first partial surface (12) along the length of the cutting insert (1) starting from the cutting edge (8), wherein a taper extends over 75% of the length of the first partial surface (12), preferably over essentially the entire length of the first partial surface (12).

3. The cutting insert (1) according to claim 1 or 2, **characterized in that** the first partial surface (12) is realized plane.

4. The cutting insert (1) according to one of claims 1 to 3, **characterized in that** the second partial surface (13) is shorter than the first partial surface (12) in a top view of the cutting insert.

5. The cutting insert (1) according to claim 4, **characterized in that** the second partial surface (13) has no more than 10% of the length of the first partial surface (12) in a top view.

6. The cutting insert (1) according to one of claims 1 to 5, **characterized in that** at least one third partial surface (14) is arranged adjacent to the second partial surface (13).

7. The cutting insert (1) according to claim 6, **characterized in that** the third partial surface (14) is realized plane and a sloping fourth partial surface (15), which ends at a lateral surface (7), is arranged adjacent to the third partial surface (14).

8. The cutting insert (1) according to one of claims 1 to 7, **characterized in that** the cutting insert (1) is realized with a preferably v-shaped groove in the region of a base surface (3).

9. The cutting insert (1) according to one of claims 1 to 8, **characterized in that** the cutting insert (1) is realized in a widened fashion in the region of the cutting edge (8).

10. The cutting insert (1) according to one of claims 1-9, **characterized in that** the cutting insert (1) consists of hard metal and is preferably coated.

11. A utilization of a cutting insert (1) according to one of claims 1 to 10 in a saw blade (19) that is essentially realized plane and circular in a side view, wherein a circumference of said saw blade features slots (24), in which a cutting insert (1) is respectively held with an elastic tensioning element (20) .

12. A saw blade (19) that is essentially realized plane and circular in a side view, wherein a circumference of said saw blade features slots (24), in which a cutting insert (1) is respectively held, and wherein said saw blade (19) is realized with elastic tensioning elements (20) that respectively hold a cutting insert (1) in one of the slots (24), **characterized in that** the cutting inserts (1) are realized in accordance with one of claims 1 to 10.

13. The saw blade (19) according to claim 12, **characterized in that** the tensioning elements (20) are respectively realized with a projection, the cross section of which is conically tapered relative to a saw blade plane toward a saw blade centre.

## Revendications

1. Plaquette de coupe (1), notamment pour une lame de scie (19) qui est conçue en étant sensiblement plane et vue latéralement, en forme de cercle et qui sur une périphérie comporte des encoches (24) dans lesquelles chaque fois une plaquette de coupe (1) est maintenue à l'aide d'un élément de serrage (20) élastique, la plaquette de coupe (1) étant conçue en étant allongée, comportant une arête de coupe (8) frontale et le long d'une longueur de la plaquette de coupe (1), en partant de l'arête de coupe (8) étant conçue en option avec une face d'attaque (9) avec une élévation (10) et directement ou indirectement dans la suite avec une surface d'appui (11) pour l'élément de serrage (20), la surface d'appui (11) étant conçue avec une première surface partielle (12), à laquelle se raccorde une deuxième surface partielle (13) saillant vers le haut, **caractérisée en ce que** latéralement de la première surface partielle (12) sont prévues des surfaces latérales (17) et/ou des régions de surfaces latérales (18) se terminant en se rétrécissant au moins par régions en partant de l'arête de coupe (8), en direction d'une extrémité opposée de la plaquette de coupe (1), le long de la longueur de la plaquette de coupe (1).

2. Plaquette de coupe (1) selon la revendication 1, **caractérisée en ce que** latéralement de la première surface partielle (12), sont prévues des surfaces latérales se terminant en se rétrécissant en continu en partant de l'arête de coupe (8), le long de la longueur de la plaquette de coupe (1), un rétrécissement s'étendant sur 75 % d'une longueur de la première surface partielle (12), de préférence sensiblement sur toute la longueur de la première surface partielle (12).

3. Plaquette de coupe (1) selon la revendication 1 ou la revendication 2, **caractérisée en ce que** la première surface partielle (12) est conçue en étant plane.

4. Plaquette de coupe (1) selon l'une quelconque des revendications 1 à 3, **caractérisée en ce qu'**en vue en élévation sur la plaquette de coupe, la deuxième surface partielle (13) est plus courte que la première surface partielle (12).

5. Plaquette de coupe (1) selon la revendication 4, **caractérisée en ce que**, vue en élévation, la deuxième surface partielle (13) présente un maximum de 10 % de la longueur de la première surface partielle (12).

6. Plaquette de coupe (1) selon l'une quelconque des revendications 1 à 5, **caractérisée en ce qu'**au moins une troisième surface partielle (14) se raccorde sur la deuxième surface partielle (13).

7. Plaquette de coupe (1) selon la revendication 6, **caractérisée en ce que** la troisième surface partielle (14) est conçue en étant plane et **en ce qu'**une quatrième surface partielle (15) déclinante qui se termine sur une surface latérale (7) se raccorde sur la troisième surface partielle (14).

8. Plaquette de coupe (1) selon l'une quelconque des revendications 1 à 7, **caractérisée en ce que** dans la région d'une surface de base (3), la plaquette de coupe (1) est conçue avec une rainure de préférence en forme de V.

9. Plaquette de coupe (1) selon l'une quelconque des revendications 1 à 8, **caractérisée en ce que** dans la région de l'arête de coupe (8), la plaquette de coupe (1) est conçue en étant élargie.

10. Plaquette de coupe (1) selon l'une quelconque des revendications 1 à 9, **caractérisée en ce que** la plaquette de coupe (1) est formée dans un métal dur et est de préférence revêtue.

11. Utilisation d'une plaquette de coupe (1) selon l'une quelconque des revendications 1 à 10 dans une lame de scie (19) qui est conçue en étant sensiblement plane et vue latéralement, en forme de cercle et qui sur une périphérie comporte des encoches (24) dans lesquelles chaque fois une plaquette de coupe (1) est maintenue à l'aide d'un élément de serrage (20) élastique.

12. Lame de scie (19) qui est conçue en étant sensiblement plane et vue latéralement, en forme de cercle et qui sur une périphérie comporte des encoches (24) dans lesquelles est maintenue chaque fois une plaquette de coupe (1), la lame de scie (19) étant conçue avec des éléments de serrage (20) élastique, lesquels maintiennent chaque fois une plaquette de coupe (1) dans l'une des encoches (24), **caractérisée en ce que** les plaquettes de coupe (1) sont conçues selon l'une quelconque des revendications 1 à 10.

13. Lame de scie (19) selon la revendication 12, **caractérisée en ce que** les éléments de serrage (20) sont conçues chaque fois avec un taquet se terminant de manière conique en direction d'un centre de la lame de scie, en coupe transversale vers un plan de la lame de scie.
